# EUROPEAN PATENT APPLICATION

(11) **EP 0 722 237 A1**
(43) Date of publication of application: **17.07.1996**
(21) Application number: 94480177.8
(22) Date of filing: 20.12.1994
(51) Int. Cl.: H04L 12/64, H04Q 11/04

(54) **Method of transmitting voice signals in a packet switching network**

(71) Applicant: INTERNATIONAL BUSINESS MACHINES CORPORATION, Armonk, NY 10504 (US)
(72) Inventor: Gallezot, René, F-06480 La Colle sur Loup (FR); Wind, Daniel, F-06340 Drap (FR); Perdaems, Pierre, F-06610 La Gaude (FR); Saint Georges, Eric, F-06610 La Gaude (FR)
(74) Representative: Lattard, Nicole

(57) **Abstract**

A method of transmitting voice signals from a source exchange telephone device (10) to a destination exchange telephone device (12) through a packet switching network (26) is disclosed, which comprises the steps of packetization of the digital samples received in a TDM frame from the source exchange telephone device into a data packet by putting into the first byte of the packet the first digital sample obtained by applying a frame slot/packet byte one-to-one mapping, putting into the second byte of the packet the second digital sample obtained by applying the one-to-one mapping to the remaining digital samples, and so on until all digital samples of said plurality of digital samples have been put into said data packet, and depacketization of the packet consisting in placing the first byte of the packet into a slot of a TDM frame to be transmitted to the destination exchange telephone device by applying the same one-to-one mapping to the first byte, placing the second byte of the packet into a slot of the TDM frame by appplying the one-to-one mapping to the second byte, and so on until all bytes of the packet have been placed into the TDM frame.

## Description

### Field of the invention

The present invention relates to the transmission of voice signals through a packet switching network, and relates particularly to a method of transmitting voice signals in such a packet switching network without any bandwidth overhead.

### Background art

The telecommunication environment is in full evolution and has changed considerably this recent years. The principal reason has been the spectacular progress realized in the communication technology due to the maturing of fiber optical transmission (high speed rates can now be sustained with very low bit error rates) and the universal use of digital technologies within private and public telecommunications networks.

In relation with these new emerging technologies, the offer of the telecommunication companies, public or private, are evolving. Indeed, the emergence of high speed transmissions entails an explosion in the high bandwidth connectivity ; the increase of the communication capacity generates more attractive tariffs ; a higher flexibility is offered to the users to manage their growth through a wide range of connectivity options, an efficient bandwidth management and the support of new media ; and once sampled and digitally encoded, voice, video and image derived data can be merged with pure data for a common and transparent transport.

In a first step, networks were primarily deployed with TDM (Time Division Multiplexing) technology to achieve cost savings through line aggregation. These systems easily supported the fixed bandwidth requirements of host/terminal computing and 64 Kbps PCM (Pulse Code Modulation) voice traffic.

The data transmission is now evolving with a specific focus on applications and by integrating a fundamental shift in the customer traffic profile. Driven by the growth of workstations, the local area networks (LAN) interconnection, the distributed processing between workstations and super computers, the new applications and the integration of various and often conflicting structures - hierarchical versus peer to peer, wide (WAN) versus local (LAN) area networks, voice versus data - the data profile has become higher in bandwidth, bursting, non deterministic and requires more connectivity. Based on the above, it is clear that there is strong requirement to support distributed computing applications across high speed backbones that may be carrying LAN traffic, voice, video, and traffic among channel attached hosts, business workstations, engineering workstations, terminals, and small to intermediate file servers. This traffic reflects a heterogeneous mix of : end user network protocols, and real time (steady stream traffic such as voice and video) and non real time (bursty nature traffic such as interactive data) transmissions.

The vision of a high-speed protocol-agile backbone network is the driver for the emergence of fast packet switching network architecture in which data, voice, and video information are digitally encoded, chopped into small packets and transmitted through a common set of nodes and links.

Circuit switching is not flexible since, when the duration of a time slot has been determined, the related bit rate is fixed to 64 kbps. Since only the channel (defined as the time slot) is available for transferring information, this solution is not suitable for all sorts of services to be supported.

High speed packet switching networks such as fit the requirements of an universal broadband network have to coexist with circuit switching networks. In most of co-existing scenarios, such a high speed packet switching will appear in the center of large circuit switching networks transmitting voice signals transparently from end-to-end.

Since circuit switching implies full synchronization of all nodes, fast packet switching network transparency will be achieved only if they transport the network clock from end-to-end, keep the circuit-time slot assignment unchanged (circuit alignment), do not alterate voice transmission which operates at a continuous bit rate, and minimize the end-to-end delay.

The packetization of the voice bytes (often named circuits, the circuit speed being 64 kbps) being performed at the input of the packet switching network, circuits are transported at the expense of an overhead due to packet header and trailer. Such an overhead is dependent upon the packetization protocol. Thus, with the ATM standard, synchronization and circuit alignment are guaranteed at the expense of extra bandwidth.

Thus, one technique for transmitting voice signals in a packet switching network consists in forming packets filled with data from only one circuit. Since packets contain a routing header, a relationship is maintained between circuits and the routing headers at both ends of the packet switching network. The problem with this method is the delay to fill a packet with a 64 kbps circuit. Big packets lead to less overhead but to much delay for the real-time traffic. Conversely, short packets are filled rapidly but consume more bandwidth and network resources.

To reduce the delay, another solution consists in filling a packet with several circuits to be transported to the same outgoing line of the packet switching network. With a TDM line using 32 channels per frame, only 125 µs are required to fill a 32 bytes packet, whereas 4 ms were necessary if the packet had to be filled with 32 bytes from only one channel. But, as several circuits are now stored in a packet, it is not possible to have a one-to-one correspondence between packet headers and circuits. One solution consists in associating the source circuit number to each sample in the packet and maintaining a one-to-one correspondence table between the circuits of the incoming line and the bytes of the outgoing line. Such a solution does not optimize bandwidth utilization.

In applications as mentioned above wherein all the incoming circuits are to be transported to the same outgoing line, circuits can be correctly positioned if the incoming frame including the synchronization channel (slot 0) is transferred to the outgoing line and, then, through the packet switching network. Such a solution has two drawbacks. First, a part of the bandwidth is used to transport the synchronization channel. This bandwidth is important in case of lines E1 which are the most commonly lines used for voice traffic wherein 64 kbps are lost. Secondly, this solution is not compatible with network configurations wherein circuits on the outgoing line come from several incoming lines since incoming lines are not synchronized at the frame level.

### Summary of the invention :

The object of the invention is therefore to provide a method of transmitting voice signals through a packet switching network which does not require any extra bandwidth to insure circuit alignment.

Another object of the invention is to provide a method of transmitting circuits such as voice circuits from an incoming time division line without any bandwidth overhead to insure synchronization with the outgoing time division multiplex line.

Accordingly, the present invention relates to a method of transmitting voice signals from a source exchange telephone device to a destination exchange telephone device through a packet switching network including an input access node which is connected to the source exchange telephone device for receiving a plurality of digital voice signal samples from a plurality of voice signal terminals such as telephone sets, the plurality of digital samples being received in a same plurality of time slots of a time division multiplex (TDM) frame, and an output access node connected to the destination exchange telephone device for transmitting thereto the plurality of digital voice signal samples, the plurality of digital samples being transmitted in a same plurality of time slots of a time division multiplex (TDM) frame. This method consists in the steps of packetization, in the input access node, of the digital samples received in a TDM frame from the source exchange telephone device into a data packet, such a packetization consisting in putting into the first byte of the data packet the first digital sample obtained by applying a frame slot/packet byte one-to-one mapping to the plurality of digital samples, putting into the second byte of the data packet the second digital sample obtained by applying the one-to-one mapping to the remaining digital samples, and so on until all digital samples have been put into said data packet; and depacketization of the data packet in the output access node, such a depacketization consisting in placing the first byte of the data packet into a slot of a TDM frame to be transmitted to the destination exchange telephone device by applying the frame slot/packet byte one-to-one mapping to the first byte, placing the second byte of the data packet into a slot of the TDM frame by applying the one-to-one mapping to the second byte, and so on until all bytes of the data packet corresponding to the plurality of digital samples have been placed into the TDM frame.

### Brief description of the drawings

The above set forth and other objects or features of the invention will be made more apparent in the following detailed description of the best embodiment when read in conjunction with the attached drawings.

Fig.1 represents schematically a system including two exchange telephone devices exchanging voice signals through a packet switching network and using the method according to the invention.

Fig.2 is a diagram illustrating the packetization using the frame slot/packet byte one-to-one mapping of the method according to a preferred embodiment of the invention.

Fig.3 is a diagram illustrating the depacketization using the frame slot/packet byte one-to-one mapping which has been used for the packetization as illustrated in Fig.2.

### Detailed description of the invention :

The method of the invention is implemented in a system wherein a source exchange telephone device 10 such a Private Branch Exchange (PBX) transmits voice signals to a destination telephone device 12, such as another PBX, and reciprocally.

The voice signals which are being named circuits thereafter, are coming from three telephone set 14 (circuit "a"), 16 (circuit "b") and 18 (circuit "c"). It will be assumed, as an example, that circuits "a", "b" and "c" are transmitted to the same exchange telephone device 12, respectively to telephone sets 20, 22 and 24. Of course, though only the transmission from telephone device 10 to telephone device 12 has been represented, voice signals, not shown, are also transmitted in the exchange from telephone device 12 to telephone device 10 by using the same principles as for the direction from device 10 to device 12.

The voice signals are exchanged through a packet switching network 26. Such a network, not represented in details on the figure, is made of switching nodes interconnected by means of high speed communication lines called trunks. The access to packet switching network 26 is through access nodes located at the periphery of the network. These access nodes comprise one or more ports, each one providing an access point for attaching external devices supporting standard interfaces to the network and performing the conversions required to transport the data flow across the network. Thus, telephone device 10 interfaces the network through access node 28 whereas telephone device 12 interfaces the network through access node 30.

The voice signals received from telephone sets 14, 16 and 18 are sampled and converted into digital data by device 10 which builds continuous frames containing a number of slots, each slot containing a data byte representing a sample of voice signal. Assuming that E1 lines are used, each frame is composed of one frame synchronization channel (slot 0) and 31 data slots. Since the transmission rate of each slot is 8 kbps, the frame duration of a frame is 125 µs and the total rate is 2.048 Mbps.

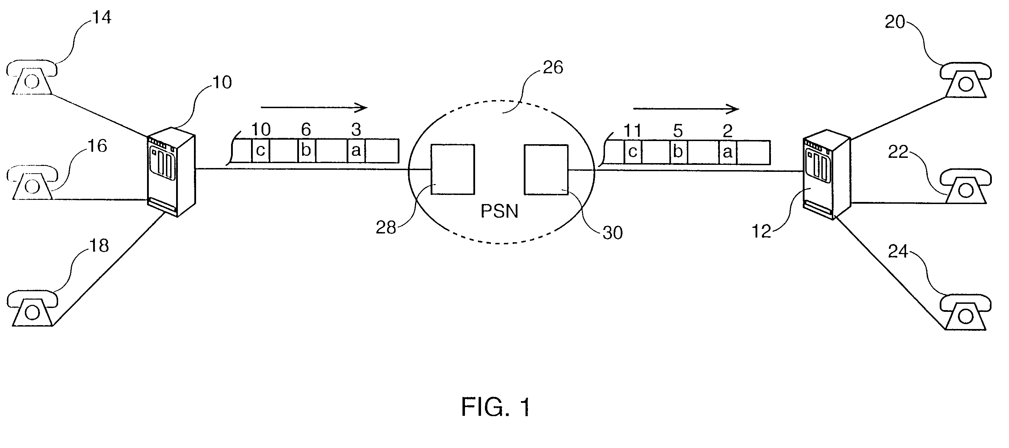

In the example illustrated in Fig.1, voice signals from telephone set 14 correspond to circuit "a", voice signals from telephone set 16 correspond to circuit "b" and voice signals from telephone set 18 correspond to circuit "c". In each frame, there is a circuit "a" contained in slot 3, a circuit "b" contained in slot 6 and a circuit "c" contained in slot 10.

Then, the TDM frame from the exchange telephone device 10 is packetized in access node 28 and routed in public switching network 26 through a plurality of switching nodes to access node 30. The data contained in the packet are depacketized by access node 30 and circuit "a", "b" and "c" are placed in a frame transmitted to destination exchange telephone device 12 at locations 2, 5 and 11 according to the method of the invention as it will be described later. Each circuit "a", "b" or "c" received in a frame each 125 µs is converted into an analog sample used to reconstruct the voice signals transmitted to telephone set 20, 22 or 24 respectively.

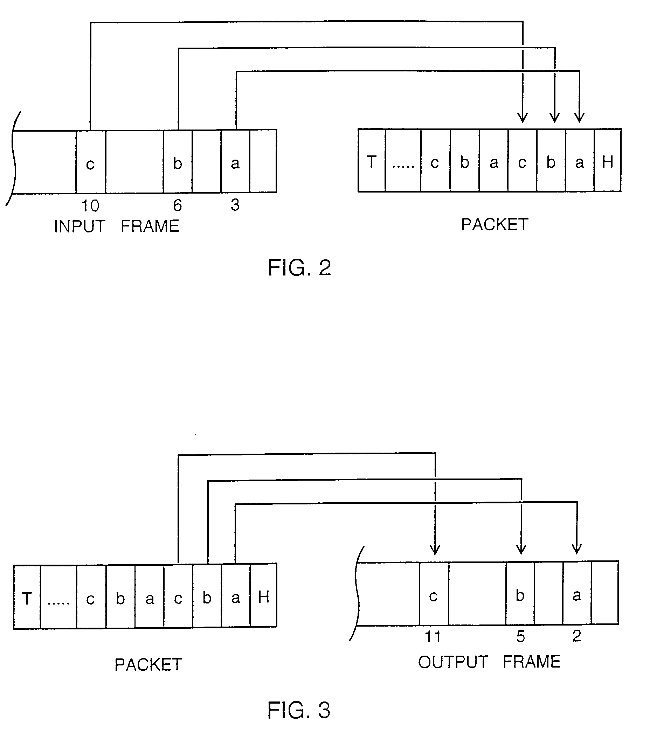

The packetization and depacketization method will now be described in reference to Fig.2 and Fig.3 respectively.

All the functions of packetization and depacketization are performed in an access node such as access node 28 or 30 by a port adapter. Such a port adapter allows terminal equipments such as exchange telephone devices 10 and 12 to exchange information through the packet switching network without the need for knowing the specific high speed protocol used. The main function of the port adapter located at access node 28 is to receive the data frames from source exchange telephone device 10 and forward the data as high speed packets over network 26 to access node 30. Likewise, the main function of the port adapter located at access node 30 is to convert high speed packets received from the network into data frames and sending them to destination exchange telephone device 12.

It must be noted that the present invention offers a solution to use a multiprotocol adapter usable as a port adapter able to support all kinds of traffic, real-time and non-real-time. Real-time traffic is used for voice since such a traffic is very sensitive to the transmission delay through the packet switching network. The flexibility of the method of the invention combined with the transparency of the HDLC protocol offers a solution to meet all the constraints of real-time traffic.

When the frame of 32 slots is received in access node 28, the port adapter does not consider slot 0 which is dedicated to framing. The first byte to be put into the first packet to be forwarded to access node 12 is taken from the circuit "a" located in the slot having the lowest number, that is slot 3. The second byte is taken from the circuit "b" located in the slot having the next ordering number, that is slot 6 ; and the third byte is taken from the circuit "c" located in the slot 10 ; and so on.

As shown in Fig.2, the packet is composed of a header H followed by circuit "a", "b", "c" and again circuits "a", "b", "c". Such a sequence of circuits "a", "b", "c" is repeated m times, and the packet is ended by a trailer T. Therefore, the length of a packet is defined as m x n, n being the number of circuits to be transported. With this constraint, the first byte of a packet is always a byte taken from the circuit with the lowest ordering number in the frame. As this byte will be transmitted in the corresponding time slot in the outgoing frame, circuit alignment is kept even in case of packet loss.

When the packet reaches access node 12, the adapter thereof starts the depacketization process by placing the first byte after the header 4 into the first slot to be used, the rank of this slot being provided by a translation table of the adapter. Thus, as shown in Fig.3, the first byte of the packet, which contains circuit "a", is placed in slot 2 of the output frame which corresponds to the first usable slot according to the adapter table. Then, the second byte containing circuit "b" is placed into slot 5 of the output frame, and the third byte containing circuit "c" is placed into slot 11. Then, the following sequence of circuits "a", "b", "c" is placed by the same method in the following output frame so that a circuit "a" (or "b" or "c") is received by destination exchange telephone device each 125µs.

It must be noted that the packetization-depacketization process adds a delay which is directly proportional to m. This delay is equal to 2ₓmₓ125µs. Thus for m=4, the packetization-depacketization process takes 0,5ms.

Using the method according to the invention does not require to transport the framing slot 0 of each TDM frame. Instead, as the access node is receiving packets, it generates itself the synchronization to be placed at the beginning of each frame containing a bundle of circuits to be transmitted to the destination exchange telephone device.

Although in the preferred embodiment of the invention as described in the present specification, the packetization starts with the circuit contained in the frame slot having the lowest ordering number (and so on), and the depacketization starts by inserting the first byte from the packet into the slot having the lowest ordering number in the frame (and so on), another rule could be applied insofar as the same rule is applied for packetization as well as for depacketization. Such a rule is in fact a one-to-one mapping between the bytes of a packet and the slots of a frame. Thus, it would have been possible to start the packetization with the circuit contained in the slot having the highest ordering number and to start the depacketization by inserting the first byte into the frame slot having the highest ordering number.

## Claims

1. Method of transmitting voice signals from a source exchange telephone device (10) to a destination exchange telephone device (12) through a packet switching network (26) including an input access node (28) which is connected to said source exchange telephone device for receiving a plurality of digital voice signal samples from a plurality of voice signal terminals such as telephone sets with said plurality of digital samples being received in a same plurality of time slots of a time division multiplex (TDM) frame, and an output access node (30) connected to said destination exchange telephone device for transmitting thereto said plurality of digital voice signal samples with said plurality of digital samples being transmitted in a same plurality of time slots of a time division multiplex (TDM) frame ; said method being characterized by the following steps :
packetization, by said input access node, of said plurality of digital samples received in a TDM frame from said source exchange telephone device into a data packet, said packetization consisting in putting into the first byte of said data packet the first digital sample obtained by applying a frame slot/packet byte one-to-one mapping to said plurality of digital samples, putting into the second byte of said data packet the second digital sample obtained by applying said one-to-one mapping to the remaining digital samples, and so on until all digital samples of said plurality of digital samples have been put into said data packet, and
depacketization of said data packet by said output access node, consisting in placing the first byte of said data packet into a slot of a TDM frame to be transmitted to said destination exchange telephone device by applying said frame slot/packet byte one-to-one mapping to said first byte, placing the second byte of said data packet into a slot of said TDM frame by applying said one-to-one mapping to said second byte, and so on until all bytes of said data packet corresponding to said plurality of digital samples have been placed into said TDM frame.

2. Method according to claim 1, wherein said frame slot/packet byte one-to-one mapping consists in
making the step of packetization by putting the circuit located into the frame slot having the lowest number into the first byte of the packet, then putting the circuit located into the frame slot having the next lowest number into the second byte of the packet, and so on,
making the step of depacketization by placing the first byte of the packet into the usable frame slot having the lowest number, then placing the second byte of the packet into the usable frame slot having the next lowest number, and so on.

3. Method according to claim 1 or 2, wherein the time division frame exchanged between said source or destination exchange telephone device and its connected access node comprises 32 slots and has a duration of 125µs.
